# EUROPÄISCHE PATENTSCHRIFT

(11) **EP 2 877 035 B1**
(45) Veröffentlichungstag und Bekanntmachung des Hinweises auf die Patenterteilung: **17.05.2017**
(21) Anmeldenummer: 13740263.2
(22) Anmeldetag: 22.07.2013
(51) Int. Cl.: A23F 5/12

(54) **VERFAHREN ZUR HERSTELLUNG EINER PULVERFÖRMIGEN SUBSTANZ BESTEHEND AUS GEMAHLENEM UND GERÖSTETEM KAFFEE**
METHODS FOR PRODUCING A POWDERY SUBSTANCE COMPRISING ROAST GROUND COFFEE
PROCÉDÉS DE PRODUCTION D'UNE SUBSTANCE EN POUDRE COMPRENANT DU CAFÉ TORRÉFIÉ ET MOULU

(30) Priorität: 25.07.2012 EP 12177900
(43) Veröffentlichungstag der Anmeldung: 03.06.2015
(73) Patentinhaber: Delica AG, 4127 Birsfelden (CH)
(72) Erfinder: GUGERLI, Raphael, 8904 Aesch (CH); ZWICKY, Katharina, CH-8617 Mönchaltorf (CH)
(74) Vertreter: Hepp Wenger Ryffel AG
(86) Internationale Anmeldenummer: PCT/EP2013/065405
(87) Internationale Veröffentlichungsnummer: WO 2014/016243

(56) Entgegenhaltungen:
- EP-A1- 1 882 431
- EP-A1- 1 882 432
- EP-A2- 0 803 197
- EP-B1- 0 844 195
- WO-A1-2004/034797
- WO-A2-2006/121520
- DE-C2- 2 146 782

## Beschreibung

Die vorliegende Erfindung betrifft ein Verfahren zur Herstellung einer pulverförmigen Substanz gemäss den Oberbegriffen der unabhängigen Ansprüche.

Die Getränkeherstellung wie beispielsweise eines Kaffeegetränks durch Extraktion von Kaffee unter Druck ist seit Langem bekannt. Hierfür kann eine bestimmte Menge einer pulverförmigen Substanz enthaltend gemahlenen und gerösteten Kaffee in eine Aufnahme einer Kaffeemaschine platziert werden, woraufhin erhitztes Wasser unter Druck in die Aufnahme gefördert wird zur Zubereitung eines Getränks. Alternativ sind auch Systeme bekannt, mittels denen vorab hergestellte Portionsverpackungen enthaltend die pulverförmige Substanz extrahiert werden können zur Zubereitung eines Getränks; derartige Portionsverpackungen werden üblicherweise lediglich einmal verwendet und nach Gebrauch entsorgt.

Aus der EP 0 844 195 B1 ist eine Portionsverpackung bekannt, die für die Extraktion unter Druck vorgesehen ist. Es wird eine Korngrössenverteilung der in der Portionspackung aufgenommenen pulverförmigen Substanz mit einem Anteil an Teilchen von mehr als 10% offenbart, deren Teilchengrösse kleiner 100 µm ist bei einem Mittelwert der Teilchengrösse d[4,3] von etwa 383 um. Damit kann beispielsweise eine Extraktionsgeschwindigkeit erhöht werden bei gleichzeitig ausreichendem Extraktionsgrad der Substanz.

Dieser bekannte Stand der Technik weist jedoch den Nachteil auf, dass die erzielbare Extraktionszeit der pulverförmigen Substanz bei den heutigen Anforderungen zu lang ist und eine Reduzierung der Extraktionszeit zu einer Verschlechterung des Extraktionsgrades und damit des Geschmacks des Getränks führen kann. Zudem wird bei dem gegebenenfalls notwendigen hohen Extraktionsdruck das Getränk möglicherweise zu warm und es kann eine Überextrahierung erfolgen. Weiterhin ist die Erzeugung eines hohen Extraktionsdrucks in der Getränkeherstellungsmaschine konstruktiv aufwendig und teuer.

Es ist daher eine Aufgabe der vorliegenden Erfindung, die Nachteile des Bekannten zu vermeiden, insbesondere also eine pulverförmige Substanz bereitzustellen, die eine verringerte Extraktionszeit bei hohem Extraktionsgrad der pulverförmigen Substanz erlaubt zur Herstellung eines im Geschmack qualitativ hochwertigen Getränks. Eine weitere Aufgabe ist die Bereitstellung eines Verfahrens zur Herstellung der pulverförmigen Substanz.

Diese Aufgaben werden durch ein Verfahren zur Herstellung der pulverförmigen Substanz mit den Merkmalen der unabhängigen Ansprüche gelöst.

Die pulverförmige Substanz besteht im Wesentlichen aus gemahlenem und geröstetem Kaffee und umfasst eine Feinfraktion mit einer Teilchengrösse von kleiner 100 µm. Der Anteil an Feinfraktion beträgt weniger als 7 %, bevorzugt weniger als 5 % und besonders bevorzugt weniger als 3 %. Alternativ wäre aber auch ein Anteil an Feinfraktion von weniger als 11%, bevorzugt weniger als 5% bis 7%, und besonders bevorzugt weniger als 3% denkbar. Die angegebenen Anteile in Prozent betreffen die Anzahl Teilchen bezogen auf die Gesamtteilchenzahl.

Die Verwendung dieser pulverförmigen Substanz zur Getränkeherstellung hat den überraschenden Vorteil ergeben, dass die Extraktionszeit gegenüber dem Stand der Technik reduzierbar ist, ohne den Extraktionsgrad im Wesentlichen zu verschlechtern. Es kann also vorteilhaft erreicht werden, dass die Extraktionszeit verringert wird, ohne den Geschmack des zubereiteten Getränks negativ zu beeinflussen.

Insbesondere ist die Extraktionszeit gegenüber dem Stand der Technik um 15 % bis 60 % im Mittel verringerbar, was den Bedienkomfort vorteilhaft für einen Benutzer verbessert. Beispielsweise beträgt eine Extraktionszeit für ein Getränkevolumen von etwa 60 ml im Stand der Technik üblicherweise 30 s bis 45 s; mit der beschriebenen pulverförmigen Substanz ist eine Extraktionszeit für ein Getränkevolumen von etwa 60 ml im Bereich von 20 s bis 25 s erreichbar bei gleich bleibender Qualität des Getränks. Diese Verringerung der Extraktionszeit ist besonders vorteilhaft für einen Bediener bei der Zubereitung eines Kaffees mit einem Getränkevolumen im Bereich von 100 ml bis 150 ml; beispielsweise ist mit der beschriebenen pulverförmigen Substanz eine Extraktionszeit für ein Getränkevolumen von etwa 150 ml im Bereich von 40 s bis 50 s erreichbar bei gleich bleibender Qualität des Getränks, wobei hierfür im Stand der Technik üblicherweise die Extraktionszeiten im Bereich von 90 s bis 100 s liegen.

Unter einer Feinfraktion wird im Sinne der vorliegenden Anmeldung die Fraktion einer pulvrigen Substanz verstanden, deren Teilchengrösse kleiner 100 µm ist, wobei die Teilchengrösse mit einem Laser-Streulichtspektrometer Horiba LA-950 der Firma Retsch bestimmt wird. Die Messung der Teilchengrösse erfolgt vorliegend als Trockenmessung.

Die Bestimmung der Teilchengrösse kann mit einem Laser/Streulichtspektrometer Horiba LA-950 der Firma Retsch durchgeführt werden. Eine derartige Messung beruht auf dem Prinzip der statischen Laserlichtstreuung, welches auch als Laserbeugung bezeichnet wird. Eine derartige Messung kann als Trockenmessung oder Nassmessung durchgeführt werden.

Unter einem "Anteil an Feinfraktion" wird eine Teilchenanzahl bezogen auf die Gesamtteilchenzahl der pulverförmigen Substanz im Sinne der vorliegenden Anmeldung verstanden.

Ein Schüttgewicht der pulverförmigen Substanz beträgt zumindest 330 g/L und bevorzugt zumindest 350 g/L. Alternativ wäre auch ein Schüttgewicht von zumindest 310 g/L denkbar. Üblicherweise liegt das Schüttgewicht von derartigen pulverförmigen Substanzen wie beispielsweise Kaffee im Bereich von 250 g/L bis 300 g/L. Dies hat den Vorteil, dass die pulverförmige Substanz pro Gewicht weniger Volumen einnimmt. Somit ist eine Verringerung beispielsweise der Grösse der Portionsverpackung möglich oder alternativ, mehr pulverförmige Substanz in eine Portionsverpackung abzufüllen, um ein stärkeres Getränk zu erzeugen.

Das Schüttgewicht wird im losen, d.h. nicht komprimierten Zustand bestimmt durch Abfüllung der pulverförmigen Substanz in einen Behälter mit definiertem Volumen und Bestimmung der Masse an pulverförmiger Substanz im definierten Volumen. Das Schüttgewicht wird auch als Schüttdichte bezeichnet und die Bestimmung erfolgt gemäss den Normen DIN ISO 697 und EN ISO 60.

Bevorzugt beträgt der Anteil an Feinfaktion mehr als 0,1 % und insbesondere mehr als 0,5 %. Dies hat den Vorteil, dass die Feinfraktion gut extrahierbar ist aufgrund des Verhältnisses von Oberfläche zu Volumen der einzelnen Teilchen; gleichzeitig wird der durch die pulverförmige Substanz im Betrieb gebildete Strömungswiderstand kaum vergrössert, was eine niedrige Extraktionszeit erlaubt.

Bevorzug liegt der Median d50 der Teilchengrösse der pulverförmigen Substanz im Bereich von 300 µm bis 500 um. Dies hat den Vorteil, dass das Extraktionsverhalten und insbesondere der erzielbare Extraktionsgrad der pulverförmigen Substanz die Herstellung eines insbesondere im Geschmack qualitativ hochwertigen Getränks erlaubt.

Insbesondere lässt sich durch Reduktion des Feinanteils die Extraktionszeit verringern und durch Einstellung des Medians d50 der Teilchengrösse die Qualität und insbesondere der Geschmack des Getränks, wobei bevorzugt der Feinanteil und der Median d50 der Teilchengrösse im Wesentlichen unabhängig voneinander regulierbar sind.

Ein weiterer Aspekt betrifft eine Verpackung enthaltend eine pulverförmige Substanz wie vorstehend beschrieben. Bei einer derartigen Verpackung kann es sich beispielsweise um Pakete von vakuumverpacktem Kaffee handeln, der beispielsweise durch einen Benutzer aus der Verpackung in bekannten Bajonett-Espressomaschinen verwendbar ist.

Bevorzugt ist die Verpackung eine Portionsverpackung und insbesondere eine Kapsel, vorzugsweise eine im Tiefziehverfahren hergestellte Kapsel aus Kunststoffmaterial. Die Portionsverpackung ist für eine Extraktion unter Druck zur Zubereitung eines Getränks verwendbar.

Insbesondere weist die Kapsel einen Boden zur Zuführung eines flüssigen Mediums, insbesondere von erhitztem Wasser, auf zur Extrahierung der pulverförmigen Substanz. Der Boden der Kapsel ist durch eine Perforationseinrichtung perforierbar zur Zuführung des flüssigen Mediums; alternativ weist der Boden zumindest eine Öffnung zur Zuführung des flüssigen Mediums auf, die vor Gebrauch der Kapsel erzeugt wurde. Das flüssige Medium umfassend das Extrakt ist durch einen Deckel der Kapsel abführbar. Der Deckel kann als Membran, insbesondere aus Aluminium, ausgebildet sein, die im Betrieb durch den Druck in der Kapsel aufreisst oder perforierbar ist; alternativ kann der Deckel als Filter, Vlies oder als Folie mit zumindest einer Öffnung ausgebildet sein.

Insbesondere kann die Kapsel alternativ einen Boden zur Abführung des flüssigen Mediums umfassend das Extrakt aufweisen, wobei das flüssige Medium durch den Deckel der Kapsel zuführbar ist. Beispielsweise können Deckel und Boden in der Getränkeherstellungsvorrichtung perforiert werden zur Zuführung und Abführung; alternativ können Deckel und/oder Boden mit zumindest einer Öffnung ausgebildet sein. Der Deckel kann als Membran, Filter, Vlies oder als Folie mit zumindest einer Öffnung ausgebildet sein.

Alternativ kann die Portionsverpackung auch als Pad ausgebildet sein.

Ein weiterer Aspekt betrifft ein Verfahren zur Zubereitung eines Getränks. Insbesondere wird ein Kaffeegetränk zubereitet. Das Verfahren umfasst den Schritt des Zuführens eines flüssigen Mediums, insbesondere erhitztem Wasser, in eine Portionsverpackung wie vorstehend beschrieben. Anschliessend erfolgt ein Extrahieren der pulverförmigen Substanz in der Portionsverpackung und Abführen des Getränks, insbesondere in ein Trinkgefäss.

Das Wasser wird insbesondere unter einem Druck im Bereich von 1 bar bis 20 bar und bevorzugt von 10 bar bis 20 bar in die Portionsverpackung umfassend die pulverförmige Substanz gefördert zum Extrahieren der pulverförmigen Substanz. Insbesondere ist das Wasser erhitztes Wasser mit einer Temperatur im Bereich von 80° C bis 100° C.

Ein zusätzlicher Aspekt betrifft ein System umfassend eine Portionsverpackung wie oben beschrieben und eine Getränkeherstellungsvorrichtung. Die Getränkeherstellungsvorrichtung weist eine Aufnahmekammer auf, in der die Portionsverpackung aufnehmbar ist. Die Aufnahmekammer weist wenigstens eine Eintrittsöffnung und wenigstens eine Austrittsöffnung für ein flüssiges Medium auf. Das flüssige Medium, insbesondere Wasser, ist durch die Portionsverpackung durchleitbar zur Extrahierung der pulverförmigen Substanz zur Herstellung eines Getränks.

Derartige Getränkeherstellungsmaschinen sind dem Fachmann seit langem bekannt, wie dies beispielsweise in der WO 2011/073310 offenbart ist.

Die vorliegende Erfindung betrifft ein Verfahren zur Herstellung einer pulverförmigen Substanz. Insbesondere wird eine pulverförmige Substanz wie oben beschrieben hergestellt. Das Verfahren umfasst den Schritt des Bereitstellens eines Mahlprodukts bestehend im Wesentlichen aus gerösteten und gemahlenen Kaffeebohnen. Das Mahlprodukt umfasst eine Feinfraktion mit einer Teilchengrösse kleiner 100 um. Das Mahlprodukt enthält einen initialen Anteil an Feinfraktion von mehr 7 % und insbesondere mehr als 8 %. Das Mahlprodukt wird in einer Verarbeitungseinrichtung, insbesondere in einer Kompaktiereinrichtung zu einer pulverförmigen Substanz verarbeitet, insbesondere kompaktiert, mit einem Anteil an Feinfraktion von weniger als 7 %, bevorzugt weniger als 5 % und besonders bevorzugt weniger als 3%. Die Anteile betreffen die Teilchen bezogen auf die Gesamtteilchenzahl.

Insbesondere wird das Vermahlen der gerösteten Kaffeebohnen zur Herstellung des Mahlprodukts in einer Walzenmühle insbesondere umfassend Riffelwalzen durchgeführt. Derartige Verfahren sind dem Fachmann aus dem Stand der Technik bekannt.

Bevorzugt ist das Schüttgewicht der pulverförmigen Substanz höher als ein Schüttgewicht des Mahlprodukts. Insbesondere entspricht der Median d50 der Teilchengrösse der pulverförmigen Substanz im Wesentlichen dem Median d50 der Teilchengrösse des Mahlprodukts. Insbesondere erhöht sich das Schüttgewicht der pulverförmigen Substanz bezogen auf das Schüttgewichts des Mahlprodukts durch diese Verarbeitung um zumindest 10 % und bevorzugt um zumindest 16 %. Insbesondere nimmt das Schüttgewicht um 20 g/L bis 150 g/L und insbesondere um 50 g/L bis 100 g/L zu.

Dies hat den Vorteil, dass die pulverförmige Substanz pro Gewicht weniger Volumen einnimmt bei weiterhin erzielbarem hohem Extraktionsgrad und damit hoher Qualität des zubereiteten Getränks. Somit ist eine Verringerung beispielsweise der Grösse der Portionsverpackung möglich. Alternativ ist es vorteilhaft möglich, mehr pulverförmige Substanz in eine Portionsverpackung abzufüllen, um ein stärkeres Getränk zu erzeugen.

Ein Median der Teilchengrösser der pulverförmigen Substanz entspricht im Sinne der vorliegenden Anmeldung im Wesentlichen dem Median der Teilchengrösse des Mahlprodukts, wenn die Medianwerte um weniger als ±20 µm und bevorzugt ±10 µm voneinander abweichen. Ein Schüttgewicht wird üblicherweise in g/L (Gramm pro Liter) angegeben. Dieser Wert wird auch als Schüttdichte bezeichnet und seine Bestimmung erfolgt gemäss DIN ISO 697 und EN ISO 60.

Das Verarbeiten des Mahlprodukts ist eine Kompaktierung des Mahlprodukts in einer Kompaktiereinrichtung. Insbesondere erfolgt die Kompaktierung im Wesentlichen verlustfrei.

Unter dem Begriff "Kompaktierung" wird im Sinne der vorliegenden Anmeldung eine Verdichtung eines Schüttguts wie beispielsweise des Mahlprodukts oder auch eine Agglomerierung von feinen Teilchen des Schüttguts zu grösseren Teilchen verstanden.

Unter dem Begriff "verlustfrei" wird vorliegend verstanden, dass im Wesentlichen das gesamte Mahlprodukt in die pulverförmige Substanz überführt wird und beispielsweise keine Fraktion vom Mahlprodukt separiert wird.

Die Verwendung einer Kompaktiereinrichtung hat den Vorteil, dass diese einfach handhabbar und kostengünstig ist. Zudem hat die im Wesentlichen verlustfreie Kompaktierung den Vorteil, dass das Mahlprodukt im Wesentlichen vollständig verwendet werden kann zur Zubereitung des Getränks und beispielsweise keine Fraktion abgetrennt werden muss, was die Kosten weiter verringert.

Das Kompaktieren des Mahlprodukts erfolgt in einer Kompaktiereinrichtung umfassend ein Kompaktierwerk mit zumindest einem Paddel.

Als Kompaktiereinrichtung kann beispielsweise eine Prallmühle beim wie nachfolgend gezeigten gewählten Betrieb verwendet werden, wie diese im Lueger Lexikon der Technik, Taschenbuchausgabe Rowohlt, Verfahrenstechnik, Band 2, Seite 364 offenbart ist.

Bevorzugt umfasst das Kompaktierwerk eine Welle und das Paddel, welches an der Welle angeordnet ist; bei Rotation der Welle um die Wellenachse weist das der Welle abgewandte Ende des Paddels eine Geschwindigkeit von zumindest 0.3 m/s und insbesondere zumindest 0.4 m/s auf. Alternativ oder zusätzlich wird das Kompaktierwerk mit einer Umdrehungsgeschwindigkeit von zumindest 100 Umdrehungen pro Minute und insbesondere von zumindest 180 Umdrehungen pro Minute betrieben. Insbesondere weist das der Welle abgewandte Ende des Paddels eine Geschwindigkeit von höchstens 4.5 m/s auf; alternativ oder zusätzlich ist die Umdrehungsgeschwindigkeit insbesondere kleiner als 1500 Umdrehungen pro Minute.

Insbesondere umfasst das Kompaktierwerk eine Welle mit dem zumindest einen Paddel, welches an der Welle angeordnet ist; bei Rotation der Welle um die Wellenachse weist das der Welle abgewandte Ende des Paddels eine Geschwindigkeit von zumindest 0.3 m/s und insbesondere zumindest 0.4 m/s auf.

Bevorzugt wird das Mahlprodukt im Bereich von 1 Minute bis 60 Minuten und insbesondere im Bereich von 2 Minuten bis 20 Minuten kompaktiert.

Besonders bevorzugt ist an einer Innenwand der Kompaktiereinrichtung zumindest eine stationäre Prallplatte angeordnet, wobei beim Kompaktieren zumindest ein Teil der pulverförmigen Substanz und/oder des Mahlprodukts mittels des Paddels gegen die zumindest eine Prallplatte geschleudert wird.

Dies hat den Vorteil der weiteren Verbesserung der Kompaktierwirkung in der Kompaktiereinrichtung.

Ein wesentlicher Aspekt der Erfindung ist grundsätzlich die Erhöhung des Schüttgewichts der pulverförmigen Substanz im Vergleich zum Mahlprodukt und zwar durch den Prozess des Kompaktierens während einer bestimmten Zeit. Bei diesem Verfahren wird ein Mahlprodukt bereitgestellt, bestehend im Wesentlichen aus gerösteten und gemahlenen Kaffeebohnen, wobei das Mahlprodukt ein Schüttgewicht von mehr als 220 g/L aufweist. Anschliessend erfolgt die Verarbeitung, insbesondere durch Kompaktieren des Mahlprodukts in einer Verarbeitungseinrichtung, insbesondere in einer Kompaktiereinrichtung, zu einer pulverförmigen Substanz mit einem Schüttgewicht das wenigstens 10% grösser ist als dasjenige des Mahlprodukts. Das Kompaktieren kann in einer Kompaktiereinrichtung wie vorstehend beschrieben erfolgen. Die Verweilzeit kann dabei bis zu 30 Minuten betragen. Mit zunehmender Verweilzeit werden insbesondere die Feinfraktionen des Mahlprodukts zu grösseren Gebilden kompaktiert oder sie werden wiederum mit gröberen Fraktionen verbunden. Das Schüttgewicht kann je nach Qualität und Feuchtigkeitsgehalt des gemahlenen Kaffees stark erhöht werden. So wurde beispielsweise bei einem Kaffee Lungo nach einer Verweilzeit von 30 Minuten ein Schüttgewicht von 360 g/L erzielt. Das Schüttgewicht vor dem Kompaktieren hat 275 g/L betragen. Die Kompaktiereinrichtung wurde mit einem Füllgewicht von 20 kg mit 400 Umdrehungen pro Minute betrieben. Je nach Paddelkonfiguration können diese Werte variieren.

Besonders vorteilhaft wird das beschriebene Verfahren so durchgeführt, dass der Anteil einer Feinfraktion mit einer Teilchengrösse von kleiner als 100 µm in der pulverförmigen Substanz wenigstens 1.5%, vorzugsweise wenigstens ca. 2% geringer ist als im Mahlprodukt. Ersichtlicherweise erfolgt so nicht einfach ein Zusammenpressen des Mahlprodukts, sondern es verändert sich die Zusammensetzung der Teilchenstruktur. Besonders bevorzugt entspricht dabei der Median d50 der Teilchengrösse der pulverförmigen Substanz im Wesentlichen dem Median d50 der Teilchengrösse des Mahlprodukts. Der Median d50 bleibt somit etwa konstant.

Besonders vorteilhafte Ergebnisse bei der Kaffeeherstellung können erzielt werden, wenn die pulverförmige Substanz ein Schüttgewicht nach der Kompaktierung von mehr als 300 g/L, bevorzugt mehr als 315 g/L aufweist.

Die Verarbeitungseinrichtung, insbesondere die Kompaktiereinrichtung kann im kontinuierlichen oder im diskontinuierlichen Betrieb arbeiten.

Ein weiterer Aspekt betrifft die Verwendung einer Kompaktiereinrichtung und insbesondere einer Prallmühle zur Herstellung einer pulverförmigen Substanz wie oben beschrieben. Insbesondere erfolgt die Verwendung gemäss einem Verfahren wie oben beschrieben.

Ein zusätzlicher Aspekt betrifft eine Kompaktiereinrichtung. Die Kompaktiereinrichtung umfasst ein Gehäuse, welches insbesondere im Wesentlichen zylindrisch ist. In dem Gehäuse ist ein Kompaktierwerk umfassend eine drehbar gelagerte Welle mit zumindest einem Paddel angeordnet. Insbesondere ist die drehbar gelagerte Welle parallel zur Zylinderachse angeordnet. Zudem weist das Gehäuse einen Einlass für ein Mahlprodukt auf und einen Auslass für eine pulvrige Substanz. Insbesondere ist auf der Innenseite des insbesondere zylindrischen Gehäuses zumindest eine stationäre Prallplatte angeordnet.

Bevorzugt ist stromaufwärts der Kompaktiereinrichtung, bezogen auf die Förderrichtung des Mahlprodukts, eine Walzenmühle zum vermahlen von gerösteten Kaffeebohnen zur Herstellung des Mahlprodukts angeordnet. Insbesondere wird das Mahlprodukt direkt nach der Vermahlung in die Kompaktiereinrichtung gefördert, beispielsweise mittels Gravitation oder durch Verwendung von beispielsweise einem Rohrkettenförderer.

Insbesondere arbeitet die Kompaktiereinrichtung im Batch-Betrieb oder kontinuierlich. Insbesondere wird das Mahlprodukt bzw. die pulverförmige Substanz vom Einlass zum Auslass der Kompaktiereinrichtung mittels Gravitation gefördert.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist.
- Figur 1:: Darstellung der kumulativen Grössenverteilung einer pulverförmigen Substanz;
- Figur 2:: Darstellung der fraktionellen Grössenverteilung der pulverförmigen Substanz gemäss Figur 1;
- Figur 3:: Schematische Darstellung einer Kompaktiereinrichtung für die Herstellung der pulverförmigen Substanz;
- Figur 4:: Schematische Darstellung einer alternativen Kompaktiereinrichtung mit Walzenmühle zur Herstellung der pulverförmigen Substanz;
- Figur 5:: Schematische Darstellung eines Systems umfassend eine Getränkeherstellungseinrichtung mit Portionsverpackung in teilgeschnittener Darstellung.

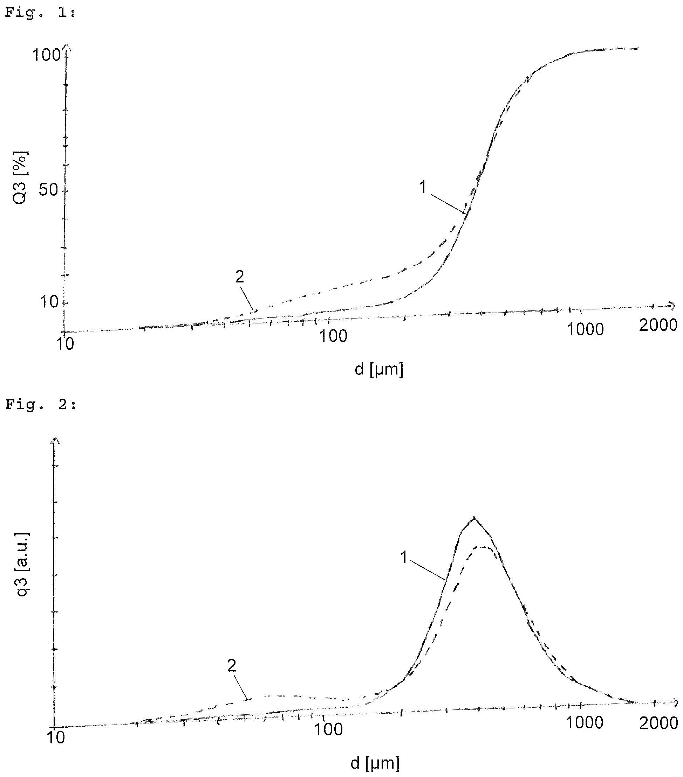

In Figur 1 ist eine kumulative Grössenverteilung Q3 in Abhängigkeit von der Teilchengrösse d dargestellt. Die durchgezogene Linie stellt eine pulverförmige Substanz 1 dar. Die gestrichelte Linie stellt ein Mahlprodukt 2 dar, wie dieses aus dem Stand der Technik bekannt ist.

Das Mahlprodukt 2 wird in einer dem Fachmann bekannten Walzenmühle mit Riffelwalzen vermahlen, was zu der entsprechenden kumulativen Grössenverteilung Q3 für das Mahlprodukt 2 führt. Eine Feinfraktion umfassend die Teilchen mit einer Teilchengrösse d kleiner 100 µm umfasst einen Anteil von ca. 10 % der Gesamtteilchenzahl.

Die pulverförmige Substanz 1 wird durch Kompaktierung des Mahlprodukts 2 in einer Kompaktiereinrichtung hergestellt. Die pulverförmige Substanz 1 weist einen Anteil an Feinfraktion von ca. 3 % auf.

In Figur 2 ist eine fraktionelle Grössenverteilung q3 in willkürlichen Einheiten in Abhängigkeit von der Teilchengrösse d dargestellt. Die pulverförmige Substanz 1 sowie das Mahlprodukt 2 entsprechen der Figur 1.

Das Mahlprodukt 2 hat einen Median d50 der Teilchengrösse d von etwa 414.6 µm. Die pulverförmige Substanz 1 weist einen Median d50 der Teilchengrösse d von etwa 417.6 µm auf. Der Median d50 der Teilchengrösse der pulverförmigen Substanz 1 entspricht im Wesentlichen somit dem Median D50 der Teilchengrösse des Mahlprodukts 2.

Ein Schüttgewicht des Mahlprodukts 2 beträgt 284 g/L und ein Schüttgewicht der pulverförmigen Substanz 1 beträgt 303 g/L.

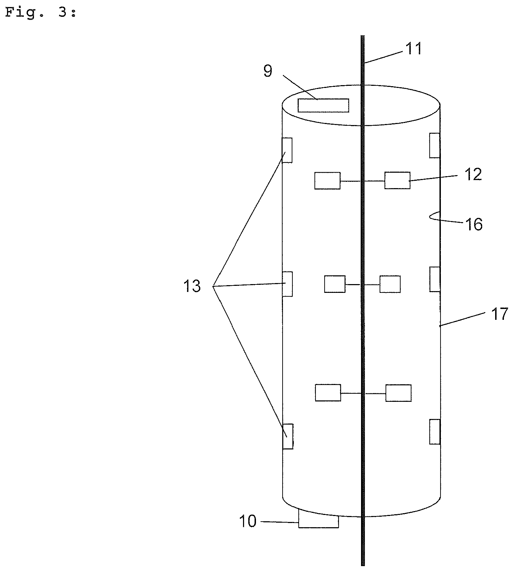

In Figur 3 ist in schematischer Darstellung eine Kompaktiereinrichtung 8 zur Herstellung einer pulverförmigen Substanz in schematischer Darstellung gezeigt.

Die Kompaktiereinrichtung 8 weist ein Gehäuse 17 mit Innenwand 16 auf. An der Innenwand 16 sind mehrere stationäre Prallplatten 13 angeordnet. Das Gehäuse 17 weist einen Einlass 9 für Mahlprodukt und einen Auslass 10 für die pulverförmige Substanz auf.

Die Kompaktiereinrichtung 8 weist ein Kompaktierwerk umfassend eine Welle 11 mit an der Welle angeordneten Paddeln 12 auf. Die etwa in der Mitte der Zeichnung angeordneten Paddel sind zu den darüber bzw. darunter angeordneten Paddeln 12 verdreht, weshalb diese hier kleiner dargestellt sind. Zur Kompaktierung wird die Welle 11 mit den daran angeordneten Paddeln 12 um die Längsachse der Welle 11 rotiert, wodurch das sich im Gehäuse 17 befindende Mahlprodukt durch die Paddel 12 geschlagen und somit kompaktiert wird.

Im Betrieb wird Mahlprodukt durch den Einlass 9 in das Gehäuse 17 der Kompaktiereinrichtung 8 gefördert. Die Längsachse der Welle 11 ist im Wesentlichen parallel zur Wirkung der Gravitation vom Einlass 9 zum Auslass 10 angeordnet. Durch Rotation der Welle 11 erfolgt ein Schlagen des zugeführten Mahlprodukts mit den Paddeln 12, wobei das Mahlprodukt und/oder die pulverförmige Substanz zumindest teilweise gegen die stationären Prallplatten 13 geschleudert wird, wodurch das zugeführte Mahlprodukt kompaktiert wird zur Herstellung der erfindungsgemässen pulverförmigen Substanz. Durch die Wirkung der Gravitation wird das Produkt zum Auslass 10 gefördert, beispielsweise zu einer Verpackungsanlage oder in eine Zwischenlagerungseinrichtung.

Die Kompaktiereinrichtung 8 kann batchweise betrieben werden oder auch kontinuierlich.

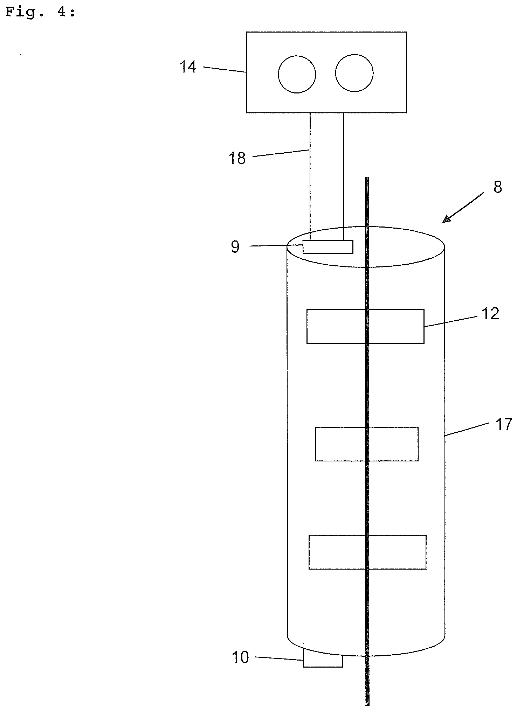

In Figur 4 ist in schematischer Darstellung eine alternative Kompaktiereinrichtung mit Walzenmühle dargestellt.

Gleiche Referenzzeichen bezeichnen gleiche Merkmale in allen Figuren und werden deshalb nur bei Bedarf erneut erläutert.

Die Kompaktiereinrichtung 8 weist wie in Figur 3 dargestellt Paddel 12 auf. Im Unterschied zur Figur 3 sind die Paddel 12 in Figur 4 vollflächig ausgebildet.

Stromaufwärts der Einlassöffnung 9 der Kompaktiereinrichtung 8 ist eine Walzenmühle 14 umfassend Riffelwalzen dargestellt. Nach Vermahlung von gerösteten Kaffeebohnen in der Walzenmühle 14 wird Mahlprodukt mittels der Fördereinrichtung 18, die hier als Förderrohr ausgebildet ist, durch Gravitation zum Einlass 9 der Kompaktiereinrichtung 8 gefördert zur Kompaktierung des Mahlprodukts wie bezüglich Figur 3 beschrieben.

Im Unterschied zu Figur 3 weist die Kompaktiereinrichtung 8 gemäss Figur 4 keine stationären Prallplatten auf.

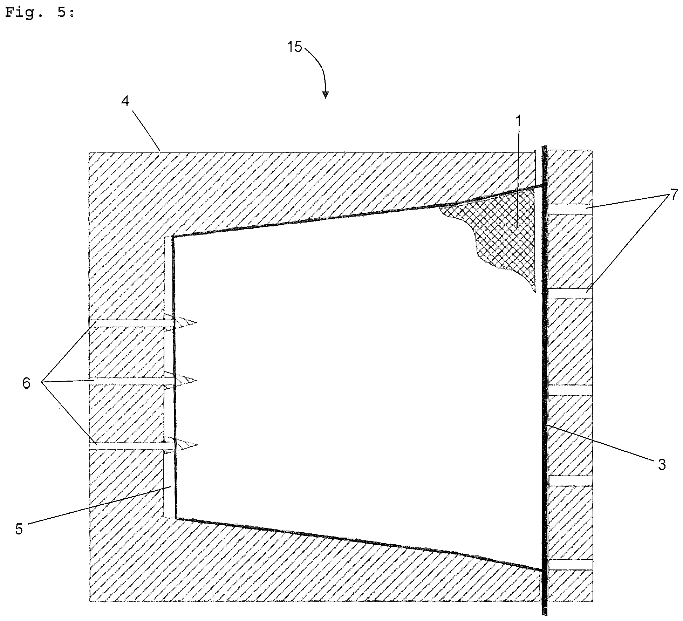

In Figur 5 ist ein System 15 umfassend eine Getränkeherstellungsmaschine 4 und eine Portionsverpackung 3 in schematischer Darstellung teilgeschnitten dargestellt.

Die Portionsverpackung 3, die vorliegend als Kapsel ausgebildet ist, enthält eine pulverförmige Substanz 1 mit einer Teilchengrössenverteilung wie in den Figuren 1 und 2 dargestellt.

Die Portionsverpackung 3 ist in einer Aufnahmekammer 5 der Getränkeherstellungsvorrichtung 4 aufgenommen. Die Getränkeherstellungsvorrichtung 4 weist mehrere Eintrittsöffnungen 6 für erhitztes Wasser auf sowie Austrittsöffnungen 7 für das Wasser umfassend das Extrakt aus der pulverförmigen Substanz.

Im Betrieb wird durch die Eintrittsöffnungen 6 erhitztes Wasser unter einem Druck von ca. 15 bar in die Portionsverpackung 3 umfassend die pulverförmige Substanz 1 gefördert. Dadurch wird die pulverförmige Substanz 1 extrahiert, woraufhin das Wasser umfassend das Extrakt aus der pulverförmigen Substanz durch Austrittsöffnungen 7 abgeführt wird. Hierzu reisst ein Deckel der Portionsverpackung auf oder wird durchstochen. Anschliessend wird das Getränk in ein Trinkgefäss gefördert, welches hier nicht dargestellt ist.

## Patentansprüche

1. Verfahren zur Herstellung einer pulverförmigen Substanz (1) umfassend die folgenden Schritte:
- Bereitstellen eines Mahlprodukts (2) bestehend im Wesentlichen aus gerösteten und gemahlenen Kaffeebohnen, wobei das Mahlprodukt (2) eine Feinfraktion mit einer Teilchengrösse von kleiner 100 µm umfasst, und wobei das Mahlprodukt (2) einen Anteil an Feinfraktion von mehr als 7% und insbesondere mehr als 8% enthält;
- Verarbeiten, insbesondere Kompaktieren des Mahlprodukts (2) in einer Verarbeitungseinrichtung, insbesondere in einer Kompaktiereinrichtung zu einer pulverförmigen Substanz (1) mit einem Anteil an Feinfraktion von weniger als 7%, bevorzugt weniger als 5% und besonders bevorzugt weniger als 3% der Teilchen bezogen auf die Gesamtteilchenzahl,
**dadurch gekennzeichnet, dass** das Verarbeiten des Mahlprodukts (2) eine Kompaktierung in einer Kompaktiereinrichtung (8) ist, wobei insbesondere die Kompaktierung im Wesentlichen verlustfrei durchgeführt wird, und dass das Kompaktieren des Mahlprodukts (2) in der Kompaktiereinrichtung (8) umfassend ein Kompaktierwerk mit zumindest einem Paddel (12) erfolgt.

2. Verfahren gemäss Anspruch 1, **dadurch gekennzeichnet, dass** ein Schüttgewicht der pulverförmigen Substanz (1) höher ist als ein Schüttgewicht des Mahlprodukts (2), wobei insbesondere der Median d50 der Teilchengrösse der pulverförmigen Substanz (1) im Wesentlichen dem Median d50 der Teilchengrösse des Mahlprodukts (2) entspricht.

3. Verfahren gemäss einem der Ansprüche 1 oder 2, **dadurch gekennzeichnet, dass** das Paddel (12) an einer Welle (11) des Kompaktierwerks angeordnet ist und ein der Welle (11) abgewandtes Ende des Paddels (12) eine Geschwindigkeit von zumindest 0.3 m/s und insbesondere zumindest 0.4 m/s aufweist und/oder das Kompaktierwerk mit einer Umdrehungsgeschwindigkeit von zumindest 100 U/min und insbesondere von zumindest 180 U/min betrieben wird.

4. Verfahren gemäss einem der Ansprüche 1 bis 3, **dadurch gekennzeichnet, dass** das Mahlprodukt (2) im Bereich von 1 min bis 60 min und insbesondere im Bereich von 2 min bis 20 min kompaktiert wird.

5. Verfahren gemäss einem der Ansprüche 1 bis 4, **dadurch gekennzeichnet, dass** an einer Innenwand (16) der Kompaktiereinrichtung (8) zumindest eine Stationäre Prallplatte (13) angeordnet ist und beim Kompaktieren zumindest eine Fraktion der pulverförmigen Substanz (1) und/oder des Mahlprodukts (2) mittels des Paddels (12) gegen die zumindest eine Prallplatte (13) geschleudert wird.

6. Verfahren zur Herstellung einer pulverförmigen Substanz (1) umfassend die folgenden Schritte:
- Bereitstellen eines Mahlprodukts (2) bestehend im Wesentlichen aus gerösteten und gemahlenen Kaffeebohnen, wobei das Mahlprodukt (2) ein Schüttgewicht von mehr als 220 g/L aufweist;
- Kompaktieren des Mahlprodukts (2) in einer Kompaktiereinrichtung zu einer pulverförmigen Substanz (1) mit einem Schüttgewicht das wenigstens 10% grösser ist als dasjenige des Mahlprodukts,
wobei das Kompaktieren des Mahlprodukts (2) in einer Kompaktiereinrichtung (8) umfassend ein Kompaktierwerk mit zumindest einem Paddel (12) erfolgt.

7. Verfahren nach Anspruch 6, **dadurch gekennzeichnet, dass** der Anteil einer Feinfraktion mit einer Teilchengrösse von kleiner als 100 µm in der pulverförmigen Substanz wenigstens 1.5% der Teilchen bezogen auf die Gesamtteilchenzahl geringer ist als im Mahlprodukt, wobei vorzugsweise der Median d50 der Teilchengrösse der pulverförmigen Substanz im Wesentlichen dem Median d50 der Teilchengrösse des Mahlprodukts entspricht.

8. Verfahren nach Anspruch 6 oder 7, **dadurch gekennzeichnet, dass** die pulverförmige Substanz ein Schüttgewicht von mehr als 300 g/L, bevorzugt mehr als 315 g/L hat.

9. Verfahren nach einem der Ansprüche 1 bis 8, **dadurch gekennzeichnet, dass** die Kompaktiereinrichtung im kontinuierlichen oder im diskontinuierlichen (Batch-Modus) Betrieb arbeitet.

## Claims

1. Method for the production of a pulverulent substance (1), said method comprising the following steps:
- providing a ground product (2) composed substantially of roasted and ground coffee beans, wherein the ground product (2) comprises a fine fraction having a particle size of smaller than 100 µm, and wherein the ground product (2) contains a proportion of fine fraction of more than 7% and in particular more than 8%;
- processing, in particular compacting, the ground product (2) in a processing installation, in particular in a compacting installation, so as to form a pulverulent substance (1) having in relation to the total particle count a proportion of fine fraction of less than 7%, preferably less than 5%, and particularly preferably less than 3%, of the particles;
**characterized in that** processing the ground product (2) is a compaction in a compacting installation (8), wherein the compaction in particular is carried out in a substantially loss-free manner, and **in that** compacting the ground product (2) is performed in the compacting installation (8) comprising a compacting unit having at least one paddle (12).

2. Method according to Claim 1, **characterized in that** a bulk density of the pulverulent substance (1) is higher than a bulk density of the ground product (2), wherein in particular the median d50 of the particle size of the pulverulent substance (1) corresponds substantially to the median d50 of the particle size of the ground product (2).

3. Method according to one of claims 1 or 2, **characterized in that** the paddle (12) is disposed on a shaft (11) of the compacting unit, and an end of the paddle (12) that faces away from the shaft (11) has a speed of at least 0.3 m/s and in particular at least 0.4 m/s, and/or the compacting unit is operated at a rotational speed of at least 100 rpm and in particular of at least 180 rpm.

4. Method according to one of Claims 1 to 3, **characterized in that** the ground product (2) is compacted in the temporal range from 1 min to 60 min and in particular in the temporal range from 2 min to 20 min.

5. Method according to one of Claims 1 to 4, **characterized in that** at least one stationary impact plate (13) is disposed on an inner wall (16) of the compacting installation (8), and during compacting at least one fraction of the pulverulent substance (1) and/or of the ground product (2) by means of the paddle (12) is hurled against the at least one stationary impact plate (13).

6. Method for the production of a pulverulent substance (1), said method comprising the following steps:
- providing a ground product (2) composed substantially of roasted and ground coffee beans, wherein the ground product (2) has a bulk density of more than 220 g/l;
- compacting the ground product (2) in a compacting installation, so as to form a pulverulent substance (1) having a bulk density that is at least 10% higher than that of the ground product;
wherein compacting the ground product (2) is performed in a compacting installation (8) comprising a compacting unit having at least one paddle (12).

7. Method according to Claim 6, **characterized in that** the proportion of a fine fraction having a particle size of smaller than 100 µm in the pulverulent substance in relation to the total particle count is at least 1.5% less than in the ground product, wherein the median d50 of the particle size of the pulverulent substance preferably corresponds substantially to the median d50 of the particle size of the ground product.

8. Method according to Claim 6 or 7, **characterized in that** the pulverulent substance has a bulk density of more than 300 g/l, preferably more than 315 g/l.

9. Method according to one of Claims 1 to 8, **characterized in that** the compacting installation operates in the continuous or in the discontinuous (batch) mode.

## Revendications

1. Procédé de fabrication d'une substance pulvérulente (1), le procédé comportant les étapes suivantes :
- préparation d'un produit broyé (2) constitué essentiellement de grains de café grillés et broyés, le produit broyé (2) comportant une fraction fine dont les particules ont une taille inférieure à 100 µm, le produit broyé (2) contenant une teneur en fraction fine supérieure à 7 % et en particulier supérieure à 8 %,
- traitement et en particulier compactage du produit broyé (2) dans un dispositif de traitement, en particulier dans un dispositif de compactage, pour obtenir une substance pulvérulente (1) dont la teneur en fraction fine par rapport au nombre total des particules est inférieure à 7 %, de préférence inférieure à 5 % et de façon particulièrement préférable inférieure à 3 % des particules,
**caractérisé en ce que**
le traitement du produit broyé (2) est un compactage dans un dispositif de compactage (8), le compactage étant réalisé essentiellement sans perte, et
**en ce que** le compactage du produit broyé (2) s'effectue dans un dispositif de compactage (8) qui comprend un mécanisme de compactage qui présente au moins une pale (12).

2. Procédé selon la revendication 1, **caractérisé en ce que** le poids en vrac de la substance pulvérulente (1) est supérieur au poids en vrac du produit broyé (2), la médiane d50 de la taille des particules de substance pulvérulente (1) correspondant en particulier essentiellement à la médiane d50 de la taille des particules du produit broyé (2).

3. Procédé selon l'une des revendications 1 ou 2, **caractérisé en ce que** la pale (12) est disposée sur un arbre (11) du mécanisme de compactage et **en ce qu'**une extrémité de la pale (12) non tournée vers l'arbre (11) présente une vitesse d'au moins 0,3 m/s et en particulier d'au moins 0,4 m/s et/ou **en ce que** le mécanisme de compactage est utilisé à une vitesse de rotation d'au moins 100 tours/min et en particulier d'au moins 180 tours/min.

4. Procédé selon l'une des revendications 1 à 3, **caractérisé en ce que** le produit broyé (2) est compacté pendant une durée de l'ordre de 1 min à 60 min et en particulier de l'ordre de 2 min à 20 min.

5. Procédé selon l'une des revendications 1 à 4, **caractérisé en ce qu'**au moins une plaque stationnaire de percussion (13) est disposée sur une paroi intérieure (13) du dispositif de compactage (8) et **en ce que** lors du compactage, au moins une fraction de la substance pulvérulente (1) et/ou du produit broyé (2) est projetée au moyen de la pale (12) contre la ou les plaques de percussion (13).

6. Procédé de fabrication d'une substance pulvérulente (1), comprenant les étapes suivantes :
- préparation d'un produit broyé (2) constitué essentiellement de grains de café grillés et broyés, le produit broyé (2) présentant un poids en vrac supérieur à 220 g/litre,
- compactage du produit broyé (2) dans un dispositif de compactage, pour obtenir une substance pulvérulente (1) dont le poids en vrac est d'au moins 10 % supérieur à celui du produit broyé,
le compactage du produit broyé (2) s'effectuant dans un dispositif de compactage (8) qui comprend un mécanisme de compactage doté d'au moins une pale (12).

7. procédé selon la revendication 6, **caractérisé en ce que** la teneur en fraction fine dont les particules ont une taille inférieure à 100 µm dans la substance pulvérulente, d'au moins 1,5 % des particules par rapport au nombre total des particules, est inférieure à celui qui prévaut dans le produit broyé, la médiane d50 de la taille des particules de la substance pulvérulente, correspondant de préférence essentiellement à la médiane d50 de la taille des particules dans le produit broyé.

8. Procédé selon les revendications 6 ou 7, **caractérisé en ce que** la substance pulvérulente présente un poids en vrac supérieur à 300 g/litre et de préférence supérieur à 315 g/litre.

9. Procédé selon l'une des revendications 1 à 8, **caractérisé en ce que** le dispositif de compactage travaille en mode continu ou en mode discontinu (mode dit "batch").
